# EUROPÄISCHE PATENTANMELDUNG

(11) **EP 0 704 692 A1**
(43) Veröffentlichungstag der Anmeldung: **03.04.1996**
(21) Anmeldenummer: 95114629.9
(22) Anmeldetag: 18.09.1995
(51) Int. Cl.: G01N 21/88, G01N 21/89

(54) **Verfahren und Vorrichtung zur Qualitätskontrolle eines Gegenstandes**

(30) Priorität: 27.09.1994 DE 4434475
(71) Anmelder: Basler GmbH, D-22926 Ahrensburg (DE)
(72) Erfinder: Klicker, Jürgen, Dr., D-22955 Hoisdorf (DE)
(74) Vertreter: Jaeschke, Rainer

(57) **Zusammenfassung**

Die Erfindung betrifft ein Verfahren und einer Vorrichtung (60) zur Qualitätskontrolle eines Gegenstandes (10). Bei dem Verfahren wird wenigstens ein Teilbereich des Gegenstandes von wenigstens einem optischen Abtastsystem (40) abgetastet, und die Grauwerte der abgetasteten Punkte werden aufgenommen und gespeichert. Die Grauwerte zumindest eines Teils der Punkte werden durch eine Auswerteeinheit (64) ausgewertet. Um eine schnellere Darstellung des Gegenstandes (10) zu erhalten, wird gemäß der Erfindung vorgeschlagen, daß zumindest ein Teil der aufgenommenen Grauwerte in einer Speichereinheit (62) gespeichert werden, daß in einer vor der Auswerteeinheit (64) geschalteten Filtereinheit (63) jeweils wenigstens ein Punkt anhand seines Grauwertes als fehlerverdächtig oder fehlerfrei klassifiziert wird, und daß zumindest die als fehlerverdächtig klassifizierten Punkte durch die Auswerteeinheit (64) anhand der in der Speichereinheit (62) gespeicherten Meßdaten ausgewertet werden.

## Beschreibung

Die Erfindung betrifft ein Verfahren zur Qualitätskontrolle eines Gegenstandes, bei welchem Verfahren wenigstens ein Teilbereich des Gegenstandes von wenigstens einem optischen Abtastsystem abgetastet wird und die Grauwerte der abgetasteten Punkte aufgenommen werden, wobei die Grauwerte zumindest eines Teils der Punkte durch eine Auswerteeinheit ausgewertet werden. Die Erfindung betrifft weiterhin eine Vorrichtung zur Qualitätskontrolle eines Gegenstandes. Insbesondere bezieht sich die Erfindung auf die optische Qualitätskontrolle einer Compact-Disc (CD), so daß im folgenden überwiegend von einer CD die Rede ist, ohne daß damit eine Beschränkung verbunden sein soll.

In letzter Zeit haben sich CD's immer mehr durchgesetzt, da sie zum einen bei der Verwendung im Hausgebrauch als Tonträger eine sehr hohe Klangqualität hervorbringen können. Zum anderen eignen sie sich wegen der hohen möglichen Datendichte auch für die Verwendung als reiner Datenträger in der Datenverarbeitung. Nicht zuletzt ist die immer weitere Verbreitung der CD's auch auf die relative Unempfindlichkeit gegen äußere Einwirkungen zurückzuführen. Dies führt schließlich dazu, daß es sich bei einer CD um ein ausgesprochenes Massenprodukt handelt, das jedoch hohen bis höchsten Qualtitätsanforderungen genügen muß.

Es sind eine Vielzahl von Meßverfahren für die unterschiedlichsten Fehler, die bei der Herstellung einer CD auftreten können, bekannt. Aufgrund des physikalischen Aufbaus einer CD, nämlich einer lichtdurchlässigen Schicht und einer dahinter angeordneten verspiegelten Schicht, eignen sich insbesondere optische Meßverfahren und Meßvorrichtungen, die auch Gegenstand dieser Erfindung sind.

Zunächst wird im folgenden der Aufbau und die Herstellung einer CD und die möglichen Fehler, die auftreten können, beschrieben. Eine CD besteht aus einer kreisrunden Scheibe, die in ihrer Mitte ein Loch für die Zentrierung in einem Abspielgerät besitzt. Die Scheibe besteht, im Querschnitt von unten, d. h. von der Leseseite des Abspielgerätes her gesehen, nach oben, aus einer lichtdurchlässigen Kunststoffschicht, im allgemeinen aus Polycarbonat, in der bereits alle Informationen in Form von Vertiefungen (Pits) enthalten sind. Darauf ist eine metallische Schicht, in der Regel Aluminium, zum Verspiegeln der Oberfläche der Polycarbonatschicht angeordnet, damit die Informationen durch das optische Abtastsystem des Abspielgerätes gelesen werden können. Die sehr dünne metallische Schicht wird durch eine ebenfalls sehr dünne Lackschicht geschützt, die im allgemeinen durch UV-Licht ausgehärtet wird. Auf dieser Lackschicht können dann Beschriftungen oder dergleichen zur Kennzeichnung der CD vorhanden sein.

In radialer Richtung kann man bei einer CD mehrere koaxiale, kreisringförmige Bereiche vom Kernloch ausgehend nach außen unterscheiden. Unmittelbar am Kernloch befindet sich der Bereich, der zum Einspannen der CD in dem Abspielgerät dient. Daran schließt sich ein Bereich an, in dem der sogenannte Ident-Code eingeprägt ist, anhand dessen die CD eindeutig identifiziert werden kann. Anschließend folgt der Bereich, der zur eigentlichen Datenspeicherung dient. Falls die CD bis zu ihrer maximalen Speicherkapazität bespielt ist, endet der Bereich unmittelbar am äußeren Randbereich. Andernfalls ist zwischen dem Randbereich der CD und dem Datenbereich noch das sogenannte Lead-Out oder ein Spiegelband angeordnet.

Bei der Herstellung wird zunächst ein Rohling aus Polycarbonat im Druckgußverfahren hergestellt, wobei durch die Matrize bereits alle Informationen eingeprägt werden. Anschließend wird die eine Oberfläche des Rohlings mit der metallischen Spiegelschicht im Sputterverfahren versehen und mit der Lackschicht versiegelt. Um eine gleichförmige Verteilung der Aluminium- und der Lackschicht zu erhalten und um eine möglichst dünne Schicht zu erzielen, wird die CD bei diesen Vorgängen zentrifugiert. Anschließend erfolgt das Bedrucken der CD mit dem Label.

Es ist offensichtlich, daß aufgrund der hohen Datendichte auf der CD, die optisch gelesen wird, die verspiegelte Schicht und der lichtdurchlässige Polycarbonatkörper hinsichtlich ihrer optischen Eigenschaften einwandfrei sein müssen. Insbesondere im Datenbereich können bereits kleinste Fehler ausreichen, um das Ablesen teilweise erheblich zu stören, wodurch insbesondere bei der Verwendung in der Datenverarbeitung unakzeptable Abweichungen bewirkt werden können. Es ist daher zweckmäßig und erforderlich, in den Produktionsprozeß eine Qualitätskontrolle einzuführen, mit welcher die möglichen Fehler einer CD entdeckt werden und klassifiziert werden können, so daß eine anschließende Aussonderung der defekten CD's oder ein Eingriff in den Produktionsvorgang erfolgen kann.

Als Fehler können auftreten: Löcher in der Spiegelschicht, sogenannte Pinholes, die dadurch entstehen, daß vor dem Sputterprozeß ein Staubkorn oder dergleichen auf der Oberfläche vorhanden war, das während des Zentrifugierens der CD nach außen geschleudert wird und ein Stück der metallischen Oberfläche mitreißt. Alukratzer treten dann auf, wenn das Staubkorn auf seinem Weg nach außen noch auf der Oberfläche verbleibt und somit weitere Schäden in der metallischen Schicht verursacht. Unterhalb der Metallschicht können organische Rückstände, beispielsweise Ölflecken, zu Abtastfehlern führen. Falls der Polycarbonatrohling auf seiner zu beschichteten Oberfläche deformiert ist, entstehen sogenannte Pickel. Als schwarze Punkte werden Fremdkörpereinschlüsse in der Polycarbonatschicht bezeichnet. In der Polycarbonatschicht können auch Bläschen, Lufteinschlüsse oder dergleichen vorhanden sein. Ferner können auf der Unterseite der CD Lackspritzer oder durch mechanische Einwirkungen verursachte Kratzer zu Ablesefehlern oder Qualitätseinbußen führen.

Diese Fehler verursachen in Abhängigkeit von ihrer Größe stets optische Abweichungen, die durch die bekannten Prüfgeräte in der Regel erfaßt werden können. Für eine Klassifikation der Fehler ist es weiterhin erforderlich, die Tiefe der jeweiligen Fehler festzustellen. Es sind daher Meßverfahren und Meßvorrichtungen erforderlich und bekannt, die den Fehler dreidimensional erfassen können. In Abhängigkeit von der Datendichte ist es erforderlich, das Prüfungsverfahren zumindest im Datenbereich mit einer hohen Prüfschärfe durchzuführen, d. h. daß eine Ortsauflösung in einem Bereich von 30 µm bis 50 µm erreicht werden muß. Außerhalb des Datenbereiches sind lediglich Fehler von Interesse, die die optische Erscheinung der CD beeinflussen. Hier würde eine geringere Prüfschärfe, beispielsweise mit einer Ortsauflösung des menschlichen Auges um etwa 200 µm, ausreichen.

Für die Erfassung dieser Fehler sind Meßverfahren und Meßvorrichtungen bekannt, bei welchen die CD mit einem optischen Abtastsystem abgetastet wird. Dabei wird ein linienförmiger Lichtstrahl auf die Unterseite in einem spitzen Winkel aufgebracht, dort reflektiert und von einer sogenannten Zeilenkamera aufgenommen. Die Zeilenkamera weist einen zeilenförmigen Empfänger auf, der in mehrere nebeneinanderliegende Bildelemente unterteilt ist. Der Fehler erscheint in der Kamera bzw. auf dem Bildschirm der Auswerteeinheit als dunkler Punkt oder als Punkt mit einem anderen Grauwert. Die CD wird während des Prüfvorgangs einmal gedreht und üblicherweise mit ca. 6000 Zeilen während der Umdrehung beleuchtet. Aufgrund der eindeutigen Geometrie und der vorgegebenen Drehung der CD kann gleichzeitig auf die Tiefe eines Fehlers geschlossen werden, da während der Drehbewegung derselbe Fehler zweimal an der gleichen Stelle auftaucht, und der Fehler daher einmal im einfallenden Lichtstrahl und einmal im ausfallenden Lichtstrahl liegt.

Die von der Kamera aufgenommenen Meßwerte eines Punktes auf der CD werden in Form eines Videosignals in einer Datenverarbeitungsanlage ausgewertet, die anhand der Grauwerte und des Ortes des Punktes einen eventuellen Fehler erkennt und anhand dessen Tiefe klassifiziert. Es ist offensichtlich, daß aufgrund der immer höher werdenden Datendichte auf einer CD auch kleinere Fehler detektiert werden müssen, so daß es notwendig ist, eine CD mit immer mehr Prüfpunkten abzutasten. Dies hat jedoch eine immer größere Datenmenge zur Folge, die von der Datenverarbeitungsanlage bearbeitet werden muß.

Es ist offensichtlich, daß die Bearbeitung einer derart großen Datenmenge auch bei der Verwendung von Hochleistungsrechnern eine erhebliche Zeitdauer erfordert, so daß eine Prüfung mit der an sich notwendigen Punktdichte häufig nicht ohne weiteres in den Produktionsprozeß integriert werden kann. Insbesondere aus Zeitgründen werden daher nach wie vor gröbere Ortsauflösungen für die Qualitätskontrolle verwendet. Dies hat jedoch den Nachteil, daß kleinere Fehler im Datenbereich, die zu Ablesefehlern führen können, nicht entdeckt oder nur unzureichend klassifiziert werden.

Der Erfindung liegt daher die Aufgabe zugrunde, ein Verfahren und eine Vorrichtung zu schaffen, mit welchem Verfahren beziehungsweise mit welcher Vorrichtung ein Gegenstand mit der erwünschten Ortsauflösung in kürzerer Zeit geprüft werden kann.

Diese Aufgabe wird gemäß der Erfindung dadurch gelöst, daß zumindest ein Teil der aufgenommenen Grauwerte in einer Speichereinheit gespeichert werden, daß in einer vor der Auswerteeinheit geschalteten Filtereinheit jeweils wenigstens ein Punkt anhand seines Grauwertes als fehlerverdächtig oder fehlerfrei klassifiziert wird, und daß zumindest die als fehlerverdächtig klassifizierten Punkte durch die Auswerteeinheit anhand der in der Speichereinheit gespeicherten Meßdaten ausgewertet werden. Dies hat den Vorteil, daß die gespeicherten Grauwerte zunächst vorsortiert werden, so daß die eigentliche Auswertung nur noch für eine geringere Datenmenge zu erfolgen braucht. Es erfolgt demnach eine echte Reduzierung der zu verarbeitenden Bildpunkte, so daß die Rechenzeit der Auswerteeinheit wesentlich reduziert werden kann.

Im einzelnen wird dabei so vorgegangen, daß von der Filtereinheit nur solche Punkte an die Auswerteeinheit weitergegeben werden, die als fehlerverdächtig klassifiziert worden sind. Dazu kann eine einfache elektronische Schaltung verwendet werden, die diese einfache Zuordnung auch für große Datenmengen in kurzer Zeit durchführt. In einer Ausführungsform der Erfindung kann vorgesehen werden, daß in der Filtereinheit jeweils der Grauwert wenigstens eines Punktes mit wenigstens einem vorgebbaren Sollwert und/oder Sollwertbereich verglichen wird. Ferner ist es möglich, daß in der Filtereinheit jeweils die Grauwerte von wenigstens zwei Punkten miteinander verknüpft werden und das Verknüpfungsergebnis mit einer vorgebbaren Menge von Sollverknüpfungsergebnissen verglichen wird und im Falle einer Abweichung zumindest einer dieser Punkte als fehlerverdächtig klassifiziert wird. Dabei ist es zweckmäßig, daß jeweils die Grauwerte von zwei nebeneinanderliegenden Punkten miteinander verknüpft werden.

Grundsätzlich können die Grauwerte der Punkte in beliebiger Weise miteinander verknüpft werden. Zweckmäßig sind jedoch solche Verknüpfungen, die eine Klassifikation im wesentlichen unabhängig von der Belichtungsstärke erlauben. Es kann vorgesehen werden, daß die Grauwerte beispielsweise voneinander abgezogen werden, wobei die Differenz einen vorbestimmbaren Bereich nicht über- oder unterschreiten darf. Es kann aber auch zweckmäßig sein, daß beispielsweise der Quotient der Grauwerte gebildet wird, wobei das Verknüpfungsergebniss in wenigstens einem vorgegebenen Bereich liegen muß. Die Filtereinheit erlaubt derartige Verknüpfungen von zwei oder einigen wenigen Werten mit gemessenen oder vorgegebenen Werten in kurzer Zeit, ohne daß eine aufwendige Auswertung erforderlich wäre.

Es ist natürlich auch möglich, daß nicht nur die Grauwerte einer bestimmten Anzahl von Punkten miteinander verglichen werden, sondern daß zusätzlich ein Vergleich mit einem vorgebbaren Schwellenwert oder Wertebereich erfolgt. Dadurch können auch Fehler mit fließenden Übergängen für die anschließende Auswertung markiert werden, bei denen der Unterschied der Grauwerte im Vergleich zu dem danebenliegenden Punkt relativ gering ist, da beispielsweise der Schwellenwert des Grauwertes von einem Punkt im Laufe der Klassifizierung über- oder unterschritten wird. Auch diese Operationen lassen sich in der Filtereinheit für große Datenmengen in kurzer Zeit durchführen.

Durch die Filtereinheit werden demnach die Punkte oder die Punktbereiche bestimmt, deren Grauwerte nicht den vogegebenen Werten oder Wertebereichen für einen fehlerfreien Punkt oder Bereich entsprechen. Dadurch können die Bereiche, in denen gegebenenfalls ein Fehler vorliegt, vor der eigentlichen, im allgemeinen zeitaufwendigeren Auswertung, definiert werden. Die Auswertung, ob tatsächlich ein Fehler vorliegt oder nicht, begrenzt sich dann beispielsweise auf einen Bereich, der vorher von der Filtereinheit markiert worden ist. Zweckmäßig ist es dabei, daß von der Auswerteeinheit auch die Grauwerte der Punkte des umliegenden Bereichs von dem Punkt, der von der Filtereinheit detektiert worden ist, ausgewertet werden, damit ein eventueller Fehler eindeutig abgegrenzt und klassifiziert werden kann.

Die Daten und Grauwerte der anderen Meßpunkte, die von der Filtereinheit nicht gekennzeichnet worden sind und nicht in den umliegenden oder eingegrenzten Punktebereich fallen, werden von der Auswerteeinheit nicht bearbeitet und erscheinen dann auf dem Bildschirm als fehlerfreie Zonen.

Die Datenmenge, die letztlich von der Auswerteeinheit bearbeitet werden muß, läßt sich dadurch wesentlich reduzieren, beispielsweise auf etwa 10% der gesamten Bilddaten. Dadurch kann die Zeit bis zur Erstellung des Bildes der geprüften CD erheblich reduziert werden.

In einer Ausführungsform der Erfindung ist vorgesehen, daß die Auswertung der Grauwerte mit unterschiedlichen Prüfschärfen in unterschiedlichen Bereichen des Gegenstandes erfolgen. Da beispielsweise bei einer CD nur der Datenbereich mit einem hoher Prüfschärfe geprüft werden muß, kann durch eine entsprechende Verringerung der Prüfschärfe und somit der Anzahl der Meßpunkte in den anderen Bereichen die Datenmenge weiter reduziert werden.

Zweckmäßig ist es dabei, daß die unterschiedlichen Bereiche des Gegenstandes von der Auswerteeinheit anhand der verschiedenen Grauwerte in diesen Bereichen identifiziert werden. Dies ist deshalb möglich, da die unterschiedlichen Bereiche beispielsweise einer CD unterschiedliche Grauwerte aufweisen, so daß zumindest die Grenzen mittels der Filtereinheit detektiert werden könnten. Die ermittelten Grenzpunkte der jeweiligen Bereiche ergeben dann einen im wesentlichen konzentrischen Kreis um die Mittelachse der CD, so daß die Auswerteeinheit daraus die erforderlichen und ggf. vorher vorgegebenen Prüfschärfen automatisch einstellen kann.

In einer zweckmäßigen Ausgestaltung der Erfindung ist vorgesehen, daß die optische Abtastung durch einen linienförmigen Lichtstrahl erfolgt und die Grauwerte von wenigstens einer Zeilenkamera aufgenommen werden. Der lichtempfindliche Empfänger kann dabei in zweckmäßiger Weise wenigstens 1024 Bildelemente aufweisen. Besonders vorteilhaft ist es jedoch, wenn der lichtempfindliche Empfänger der verwendeten Kamera wenigstens 2048 Bildelemente aufweist. Dies hat den Vorteil, daß die Ortsauflösung in Richtung des Lichtstrahls, bei einer CD also in radialer Richtung, wesentlich erhöht werden kann, wobei durch die schnellere Datenverarbeitung aufgrund der Vorsortierung der Daten mittels der Filtereinheit ausgenutzt werden kann. Eine Verlängerung der Prüfzeitvorgabe innerhalb des Produktionsprozesses ist daher nicht erforderlich.

Es ist offensichtlich, daß sich bei der allgemein angewandten Prüfung der CD mit radialen Strahlen der Abstand der Strahlen in Umfangsrichtung mit zunehmendem Abstand von der Mittelachse immer weiter vergrößert, so daß insbesondere im äußeren Randbereich ggf. auch größere Fehler nicht erfaßt werden können. Da es nunmehr möglich ist, auch größere Datenmengen in kurzer Zeit zu verarbeiten, ist in einer vorteilhaften Ausgestaltung der Erfindung vorgesehen, daß die gesamte Oberfläche der CD durch wenigstens 10000 Linien abgetastet wird. Dadurch ist es möglich, auch kleinere Fehler im Randbereich zu detektieren. Je nach Bauart der verwendeten Kamera kann die Anzahl der belichteten Zeilen auch ca. 12000 betragen.

Grundsätzlich können beliebige Kameras und Belichtungsarten miteinander verwendet werden. Durch die Klassifizierung der Grauwerte vor ihrer eigentlichen Auswertung erlaubt jedenfalls, daß nicht nur Kameras mit hohem Ortsauflösevermögen sondern auch gleichzeitig schnellarbeitende Kameras eingesetzt werden können. Dies hat zur Folge, daß zum einen eine höhere Anzahl von Bildpunkten ausgewertet werden kann und zum anderen eine schnellere Bearbeitung erfolgen kann. Insbesondere ist es auch möglich, bei längeren Prüfzeiten eine wesentlich höhere Ortsauflösung zu erzielen. Die Datenmenge, die gemäß der Erfindung bearbeitet werden kann, hängt letzlich nur noch von der maximalen Rechengeschwindigkeit des verwendeten Prozessors ab.

Da es gemaß der Erfindung nunmehr möglich ist, auch große Datenmengen in sehr kurzer Zeit zu verarbeiten, ist es weiterhin vorgesehen, daß die vollständige Umdrehung für die vollständige Belichtung der CD in 0,25 bis 2,5 Sekunden erfolgt. Diese kurze Belichtungszeit und die sich anschließende kurze Bearbeitungszeit der Meßwerte ermöglicht eine problemlose Integration der Qualitätskontrolle in den Produktionsprozeß.

Die Vorrichtung zum Prüfen eines Gegenstandes, insbesondere einer CD, weist wenigstens ein Abtastmittel zum optischen Abtasten und wenigstens ein Aufnahmemittel zum Erfassen der Grauwerte der abgetasteten Punkte von wenigstens einem Teilbereich des Gegenstandes auf, wobei das Aufnahmemittel in Verbindung mit einer Auswerteeinheit für die Grauwerte der Punkte steht. Gemäß der Erfindung ist vorgesehen, daß wenigstens ein Speichermittel zum Speichern von wenigstens einem Teil der aufgenommenen Grauwerte vorgesehen ist, und daß zwischen dem Abtastmittel und der Auswerteeinheit wenigstens ein Filtermittel angeordnet ist, um die Punkte anhand ihrer Grauwerte vor der Auswerteeinheit zu klassifizieren. Durch die Filtereinheit kann die Datenmenge, die von der Auswerteeinheit bearbeitet werden muß, erheblich reduziert werden.

In einer vorteilhaften Ausgestaltung ist vorgesehen, daß das Filtermittel eine elektronische Schaltung aufweist, die so geschaltet ist, um jeweils die Grauwerte von zwei vorzugsweise nebeneinanderliegenden Punkten miteinander zu verknüpfen. Durch eine feste elektronische Schaltung kann die erforderliche Klassifikation der Grauwerte, nämlich ob die Grauwerte der beiden betreffenden Punkte voneinander abweichen, mit sehr hoher Geschwindigkeit erfolgen. Die Vorsortierung der gemessenen Grauwerte erfordert daher kaum Prüfzeit, und die Zeit für die eigentliche Auswertung der Grauwerte in der Auswerteeinheit reduziert sich aufgrund der verringerten Datenmenge ebenfalls. Daher kann die Prüfvorrichtung ohne weiteres in einen Produktionsprozeß integriert werden.

Zweckmäßig kann es auch sein, daß das Filtermittel eine elektronische Schaltung aufweist, die so geschaltet ist, um jeweils den Grauwert von wenigstens einem Punkt mit wenigstens einem vorgebbaren Sollwert und/oder Sollwertbereich zu vergleichen. Damit können auch Fehler mit undeutlichen Grenzen sicher erkannt werden.

Zweckmäßig ist es insbesondere bei der Prüfung von rotationssymmetrischen oder kreisrunden Gegenständen, beispielsweise CD's, daß das Abtastmittel wenigstens eine Lichtquelle zum Erzeugen eines linienförmigen Lichtstrahls aufweist. Dadurch können sich die Lichtstrahlen radial von der Mittelachse erstrecken, wodurch eine Beleuchtung der gesamten Oberfläche in einfacher Weise durch eine Umdrehung des Gegenstandes bewirkt werden kann.

Für eine hohe Ortsauflösung kann vorgesehen werden, daß das Aufnahmemittel einen lichtempfindlichen Empfänger mit wenigstens 1024 Bildelementen in einer Zeile aufweist. Insbesondere ist es jedoch zweckmäßig und aufgrund der erfindungsgemäßen Reduzierung der letztlich zu verarbeitenden Datenmenge durch die Filtereinheit auch möglich, daß das Aufnahmemittel einen lichtempfindlichen Empfänger mit wenigstens 2048 Bildelementen in einer Zeile aufweist. Dadurch kann das Punktraster wesentlich erhöht werden, so daß auch kleinere Fehler entdeckt werden können.

Die Erfindung wird im folgenden anhand der schematischen Zeichnung näher erläutert. Es zeigen:
- Fig. 1: eine Draufsicht auf eine Compact-Disc,
- Fig. 2: einen Querschnitt einer Compact-Disc entlang der Linie II-II in Fig. 1,
- Fig. 3: in schematischer Darstellungsform die möglichen Fehler in einer Compact-Disc,
- Fig. 4: eine Draufsicht auf eine mit dem Lichtstrahl beleuchtete CD,
- Fig. 5: das Abtastsystem einer Vorrichtung gemäß der Erfindung und
- Fig. 6: im Schema ein Blockdiagramm einer Vorrichtung gemäß der Erfindung.

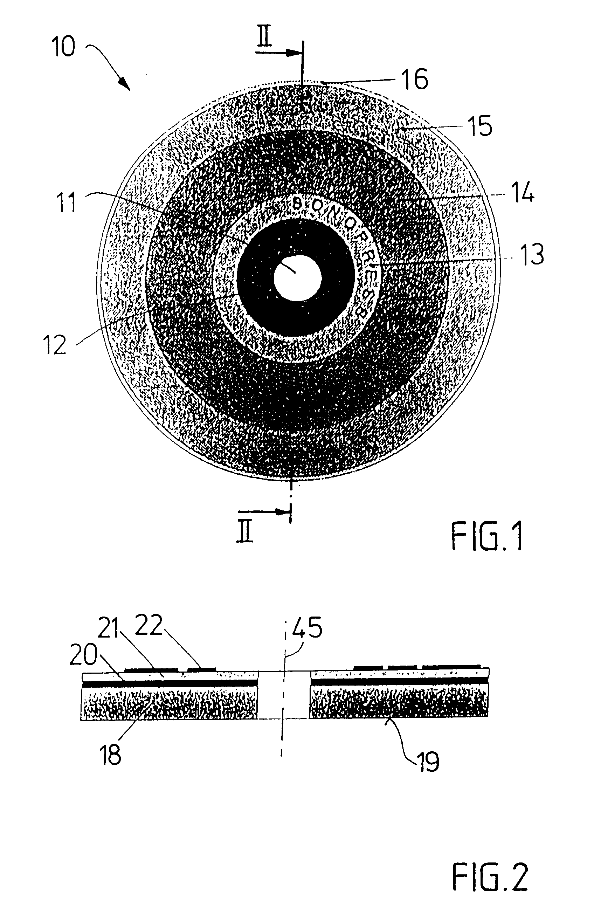

In den Fig. 1 und 2 ist schematisch der Aufbau einer CD 10 dargestellt. Wie in Fig. 1 ersichtlich, weist die CD 10 in radialer Richtung unterschiedliche Bereiche auf. Von innen nach außen sind zunächst das Kernloch 11 für die Zentrierung in dem Abspielgerät und der innere Randbereich 12 für das Verspannen mit der Abspielvorrichtung vorhanden. Daran schließt sich ein Bereich 13 für die Aufnahme des Ident-Codes an, der von dem eigentlichen Datenbereich 14 umgeben wird. Je nach Füllungsgrad mit Informationen kann sich an den Datenbereich 14 ein Lead-Out 15, ein Spiegelband oder unmittelbar der äußere Randbereich 16 anschließen.

In axialer Richtung (Fig. 2) weist die CD 10 von unten nach oben gesehen eine lichtdurchlässige Polycarbonatschicht 18 auf, die auf der der Unterseite 19 abgewandten Seite mit einer Metallschicht 20 versehen ist. Dadurch entsteht eine spiegelnde Oberfläche, so daß die innerhalb der Polycarbonatschicht in Form von Vertiefungen (nicht dargestellt) gespeicherten Daten von der Unterseite 19 her in dem Abspielgerät durch optische Mittel abgetastet werden können. Die Metallschicht 20 ist auf ihrer der Polycarbonatschicht 18 abgewandten Seite mit einer Lackschicht 21 versiegelt, auf welcher eine Farbschicht 22 als Label aufgedruckt sein kann.

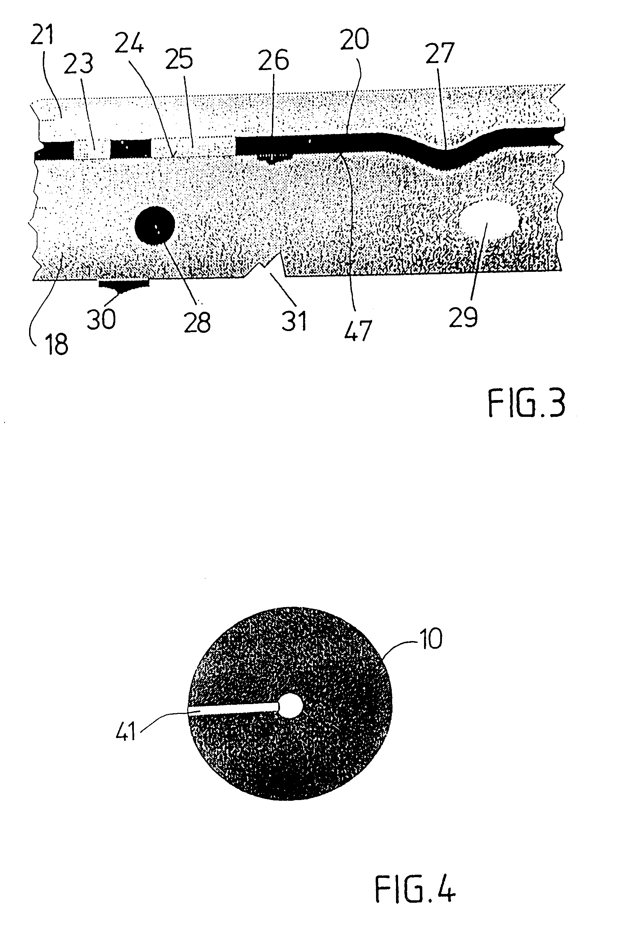

In Fig. 3 sind die möglichen Fehler dargestellt, die bei der Herstellung einer CD auftreten und durch übliche Meßmethoden sichtbar gemacht werden können. Unter dem Bezugszeichen 23 sind sogenannte Pinholes dargestellt, die durch Staubkörner auf der Oberfläche 24 des Rohlings der Polycarbonatschicht liegen und sich beim Zentrifugieren während des Sputtervorganges von der

Oberfläche lösen und dabei ein Stück der metallischen Schicht 20 mitreißen. Die sogenannten Alukratzer 25 entstehen auf die gleiche Weise, jedoch wandert das Staubkorn zunächst noch auf der Oberfläche 24 weiter nach außen. Die Ölflecke 26 sind organische Rückstände auf der Oberfläche 24 der Polycarbonatschicht 18 der CD 10. Ein sogenannter Pickel 27 entsteht durch eine Verformung des Polycarbonatrohlings 18. Ferner können noch schwarze Punkte 28 durch Fremdkörpereinschlüsse oder Bläschen 29 durch Gaseinschlüsse innerhalb der Polycarbonatschicht 18 vorhanden sein. Auf der Unterseite 19 der Polycarbonatschicht treten als Fehler Lackspritzer 30 oder Kratzer 31 durch äußere mechanische Einwirkungen auf. Diese Fehler bewirken einen verminderten Lichtdurchgang des Prüflichtstrahls, so daß bei der bildlichen Darstellung an den betreffenden Stellen schwarze Bereiche oder Bereiche mit unterschiedlichen Grauwerten sichtbar werden.

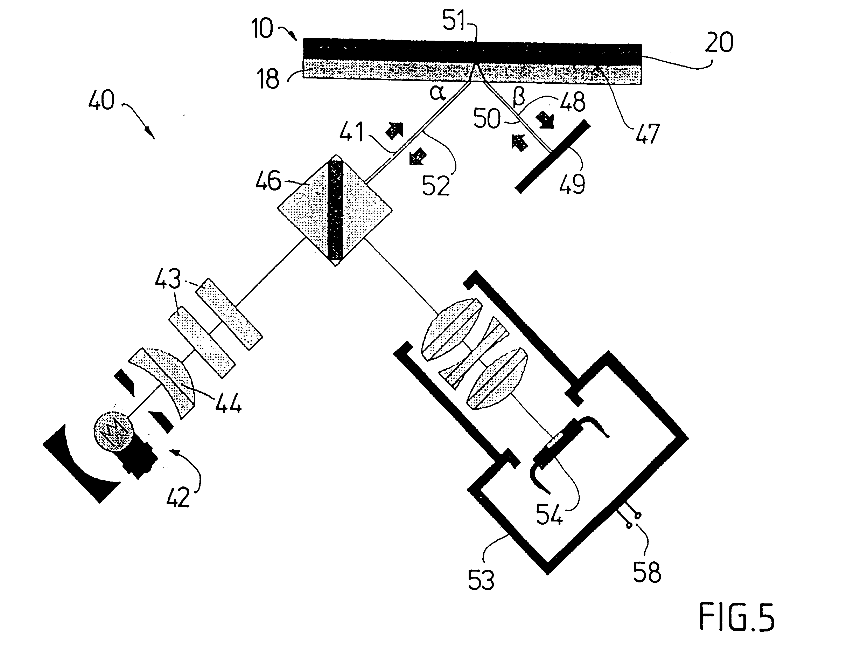

In der Fig. 5 ist eine Abtastvorrichtung 40 zur Qualitätskontrolle von CD's 10 schematisch dargestellt. Die Zeichnung beschränkt sich auf die Darstellung des Strahlenverlaufs des Lichtstrahls 41, da dem Fachmann aus dieser Darstellung der erforderliche Aufbau mit den einzuhaltenden Winkeln und dergleichen ohne weiteres bekannt ist.

Die Abtastvorrichtung 40 weist eine Lichtquelle 42 auf, die beispielsweise als herkömmliche Halogenleuchte ausgebildet sein kann. Durch die Anordnung verschiedener, allgemein bekannter Blenden und Linsen 43, 44 kann ein in bezug auf die Oberfläche der CD 10 linienförmiger Lichtstrahl 41 erzeugt werden, der auf die Unterseite 19, die Leseseite, der CD 10 in Form eines radial von der Mittelachse 45 ausgehenden Strahles auftrifft. Die linienförmige Beleuchtung der CD 10 ist in Fig. 4 dargestellt. Die CD dreht sich während des Prüfens um diese Mittelachse 45. Es ist natürlich auch möglich, daß sich der Lichtstrahl über den gesamten Durchmesser der CD 10 erstreckt. In diesem Fall wäre für eine vollständige Prüfung der CD 10 nur eine halbe Umdrehung derselben erforderlich.

In Richtung des Verlaufs des Lichtstrahles 41 ist zwischen der Lichtquelle 42 und der CD 10 ein Strahlteiler 46 vorgesehen, der zunächst von einem Teil des Lichtstrahls 41 ohne Ablenkung passiert wird, der auf die Unterseite 19 der lichtdurchlässigen Schicht 18, der Polycarbonatschicht, der CD 10 trifft und dort nach den optischen Eigenschaften dieser Schicht gebrochen wird. Der Einfallswinkel α ist so gewählt, daß an der Unterseite 19 der Polycarbonatschicht 18 keine Totalreflexion auftritt und kann beispielsweise zwischen 30° und 60° liegen. An der durch die metallische Schicht 20 gebildeten verspiegelten Oberfläche 47 wird der Lichtstrahl 41 reflektiert und tritt nach entsprechender Brechung unter dem gleichen Ausfallswinkel β wieder aus der Polycarbonatschicht 18 hinaus.

Im weiteren Verlauf des reflektierten Lichtstrahls 48 ist ein Spiegelelement 49 angeordnet, das so ausgerichtet ist, daß es den einfallenden Lichtstrahl 48 genau entgegengesetzt reflektiert, so daß ein zu dem reflektierten Lichtstrahl 48 entgegengesetzt verlaufender Lichtstrahl 50 gebildet wird. Um Mißverständnissen vorzubeugen, wird darauf hingewiesen, daß lediglich zur Verdeutlichung der unterschiedlichen Lichtstrahlen diese nebeneinander gezeichnet sind. Bei korrekt eingestellter Optik verlaufen die Lichtstrahlen übereinander.

Dieser Lichtstrahl 50 wird wiederum entsprechend den optischen Eigenschaften der lichtdurchlässigen Schicht 18 gebrochen und an der verspiegelten Oberfläche an demselben Punkt 51, an dem bereits der einfallende Lichtstrahl 41 gespiegelt worden ist, ebenfalls reflektiert. Aufgrund dieser Anordnung wird daher die CD 10 in einer Meßlage, d. h. , daß die CD 10 keine weitere Drehung durchführt, zweimal von dem Lichtstrahl durchlaufen, nämlich einmal von dem originären Lichtstrahl 41 und zum zweiten Mal von dem an dem Spiegelelement 49 reflektierten Lichtstrahl 50.

Es ist offensichtlich, daß dadurch auch kontrastärmere Fehler, also beispielsweise stochastische oder großflächige Fehler, sichtbar gemacht werden können, da derselbe Lichtstrahl zweimal durch den Fehler abgeschwächt wird, wodurch der Kontrast im Vergleich zu den daneben verlaufenden ungestörten Strahlen erhöht wird. Insbesondere ist es jedoch möglich, daß nunmehr die unterschiedlichen Bereiche 13, 14, 15, 16 der CD 10 leichter erkannt werden können, die sich hinsichtlich ihrer Grauwerte häufig nur wenig unterscheiden.

Der austretende Lichtstrahl 52 trifft auf den Strahlteiler 46, in dem er entsprechend der Ausbildung und Ausrichtung des Strahlteilers 46 aufgeteilt wird. Bei dem in der Zeichnung dargestellten Ausführungsbeispiel wird ein Teil des rückläufigen Lichtstrahls 52 um ca. 90° abgelenkt. In Ablenkungsrichtung hinter dem Strahlteiler 46 ist ein lichtempfindlicher Empfänger angeordnet, der bei dem Ausführungsbeispiel als Zeilenkamera 53 ausgebildet ist. Die Zeilenkamera 53 weist in bekannter Weise einen zeilenförmigen Empfänger 54 auf, der von dem linienförmigen, mehrfach reflektierten Lichtstrahl zumindest teilweise belichtet wird. Eventuelle Fehler der CD 10 werden durch entsprechend dunkle oder schwächer belichtete Stellen sichtbar.

Der Videoausgang 58 der Zeilenkamera 53 steht mit einer Datenverarbeitungsanlage 61 in Verbindung. Diese Datenverarbeitungsanlage 61 ermittelt unter anderem die Tiefe des festgestellten Fehlers, indem erkannt wird, daß dieselbe Verdunklung an der gleichen Stelle bei unterschiedlichen Winkelpositionen der CD 10 erscheint. Zum anderen werden die Daten dahingehend ausgewertet, daß die unterschiedlichen radialen Bereiche einer CD 10 erkannt werden, so daß vorgesehen werden kann, innerhalb des Datenbereiches 14 mit erhöhter Prüfschärfe zu arbeiten. Es kann ferner vorgesehen werden, daß der Lichtstrahl auch den Bereich für den Ident-Code belichtet, der anschließend in der Datenverarbeitungsanlage ausgewertet werden kann.

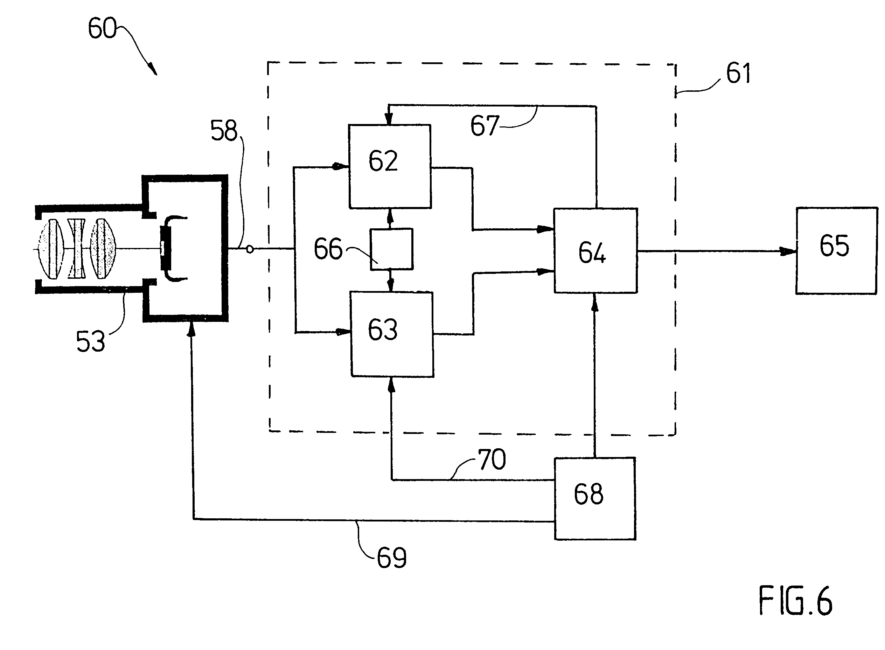

Die Datenverarbeitungsanlage 61 der Vorrichtung 60 zur Qalitätskontrolle eines Gegenstandes 10 umfaßt bei dem in Fig. 6 gezeigten Ausführungsbeispiel eine Speichereinheit 62, eine Filtereinheit 63 und eine Auswerteeinheit 64 sowie ein Anzeigemittel 65, beispielsweise einen Bildschirm. Im einzelnen ist die Anordnung so getroffen, daß der Videoausgang 58 der Zeilenkamera 53 zum einen mit der Filtereinheit 63 und zum anderen mit der Speichereinheit 62 in Verbindung steht, in der alle aufgenommenen Bilddaten gespeichert werden. Die Speichereinheit 62 und die Filtereinheit 63 stehen ihrerseits mit der Auswerteeinheit 64 in Verbindung, die aus den ermittelten Grauwerten der einzelnen Bildpunkte ein im wesentlichen vollständiges Bild der geprüften CD auf dem Bildschirm 65 anzeigt.

Bei der Prüfung wird so vorgegangen, daß die CD während einer Umdrehung vollständig belichtet wird und alle Daten, d. h. alle Grauwerte und Koordinaten der einzelnen Punkte in der Speichereinheit 62 gespeichert werden. Gleichzeitig oder anschließend werden die Grauwerte der einzelnen aufgenommenen Punkte in der Filtereinheit 63 klassifiziert, zum Beispiel mit dem des daneben liegenden Punktes verglichen, und im Falle einer vorbestimmten Abweichung an die Auswerteeinheit 64 weitergegeben. Im einzelnen wird so verfahren, daß die aufgenommenen Punktdaten unmittelbar in der Filtereinheit 63 klassifiziert werden, wobei im Falle einer Klassifikation als fehlerverdächtig die Filtereinheit 63 der Auswerteeinheit 64 den entsprechenden Speicherplatz des betreffenden Punktes in der Speichereinheit 62 übermittelt. Dazu ist eine Synchronisationseinheit 66 vorgesehen, die mit der Speichereinheit 62 und der Filtereinheit 63 in Verbindung steht, um die Information über den für diese Punktdaten zugeteilten Speicherplatz zu koordinieren und an die Filtereinheit 63 weiterzugeben. Die Auswerteeinheit 64 greift anschließend auf diesen Speicherplatz und ggf. auf die Punktdaten eines vorbestimmbaren Bereiches um diesen markierten Punkt herum zu, um die Meßdaten auszuwerten und den eventuellen Fehler zu klassifizieren.

Die Filtereinheit 63 besteht dabei aus einer fest zusammengeschalteten elektronischen Schaltung, die lediglich einfache Verknüpfungsoperationen von Grauwerten einer bestimmten geringen Anzahl, beispielsweise 2 bis 10, von Punkten durchführt. Eine feste Schaltung bedeutet hier eine Schaltung, die entweder nicht oder nur in einem begrenzten Maß programmierbar ist. Dies hat den Vorteil, daß bei der Verwendung von nicht programmierbaren Bauelementen die Rechengeschwindigkeit wesentlich höher sein kann als bei programmierbaren Einheiten. Durch die feste Schaltung können daher diese Funktionen auch bei großen Datenmengen in kurzer Zeit durchgeführt werden.

Die Auswerteeinheit 64 kann dabei so ausgelegt sein, daß sie, ausgehend von einem detektierten Punkt, der als fehlerverdächtig klassifiziert worden ist, einen größeren Bereich auswertet und überprüft, um so einen eventuell vorhandenen Fehler sicher zu erkennen. Dazu kann die Auswerteeinheit jederzeit die gespeicherten Daten über die Signalleitung 67 von der Speichereinheit 62 abrufen.

In der Speichereinheit 62 sind grundsätzlich alle aufgenommenen Daten der geprüften CD gespeichert, so daß ein Zugriff jederzeit möglich ist. Die Auswertung der einzelnen Daten mit unterschiedlichen Prüfschärfen kann daher bei geringerer Prüfschärfe, beispielsweise im Lead-Out, so erfolgen, daß die Meßdaten nicht von jedem, sondern nur von jedem zweiten oder dritten Punkt von der Filtereinheit 63 oder Auswerteeinheit 64 aufgerufen werden. Es ist daher nicht erforderlich, daß die Kamera entsprechend der Prüfschärfe eingestellt werden muß. Besonders zweckmäßig ist es dabei, wenn die unterschiedlichen koaxialen Bereiche 13, 14, 15, 16 einer CD aufgrund ihrer Grauwertunterschiede von der Auswerteeinheit 64 erkannt werden, so daß die Prüfschärfe seitens der Auswerteeinheit 64 automatisch eingestellt werden kann.

Für die Vorgabe bestimmter Parameter zur Durchführung der Messungen ist ferner eine Eingabeeinheit 68 vorgesehen, die mit der Auswerteeinheit 64 in Verbindung steht. Dort können beispielsweise die Vorgaben über die Prüfschärfen in den einzelnen Bereichen eingegeben werden. Die Eingabeeinheit 68 kann beispielsweise auch mit der Zeilenkamera 53 über eine Signalleitung 69 in Verbindung stehen, so daß der lichtempfindliche Empfänger oder die Optik auf unterschiedliche Gegenstände mit beispielsweise unterschiedlichen Durchmessern angepaßt werden kann. Ferner kann die Eingabeeinheit 68 noch über eine Signalleitung 70 mit der Filtereinheit 63 in Verbindung stehen, um die vorzugebenden Bedingungen für die Klassifizierung der Grauwerte oder deren Verknüpfungen einzugeben.

Grundsätzlich ist es möglich, die Grauwerte von beliebigen Bildpunkten miteinander zu verknüpfen oder zu vergleichen. Zweckmäßig kann es aber in einer weiteren Ausführungsform sein, daß stets der aktuell abgetastete Bildpunkt mit dem Vorgänger des vorhergehenden Bildpunktes verknüpft wird. Dies hat zum einen den Vorteil, daß auch geringere Schwankungen der Grauwerte um einen Schwellenbereich erfaßt werden können, ohne die Toleranzgrenze einzuengen. Ferner besteht die Möglichkeit, die zur Zeit verfügbaren Videokameras effektiv auszunutzen, da diese je einen Ausgangskanal für Bildpunkte mit gerader Ordnungsziffer und für Bildpunkte mit ungerader Ordnungsziffer haben. In der Filtereinheit könnten daher stets die aufeinanderfolgenden Signale eines Kanals verarbeitet werden, da diese stets den aktuellen Bildpunkt und den Vorgänger des vorhergehenden Bildpunktes entsprechen. Selbstverständlich ist es auch möglich, daß der Grauwert des aktuellen Bildpunktes mit dem eines Bildpunkt verglichen wird, der zwei oder mehrere Ordnungsnummern früher abgetastet worden ist.

Zusammenfassend kann festgestellt werden, daß durch die Filtereinheit eine Fehlerverdachtsmatrix erzeugt werden kann, die als Ausgangsbasis für die Fehlerauswertung dient und anhand welcher die Auswerteeinheit die möglichen Fehler genau auswerten und klassifizieren kann. Die Filtereinheit verarbeitet stets nur eine beschränkte Anzahl von Punkten, so daß diese Vorauswertung sehr schnell, d. h. im wesentlichen zeitgleich, mit der Abtastung erfolgen kann. Da nunmehr die vollständige Auswertung nur noch innerhalb der von der Filtereinheit angegebenen und ggf. von der Auswerteeinheit begrenzten Bereiche zu erfolgen braucht, muß lediglich eine geringere Datenmenge verarbeitet werden. Das Prüfverfahren kann daher in sehr kurzer Zeit durchgeführt werden. Insbesondere ist es durch dieses Verfahren möglich, schnell arbeitende Kameras mit einer hohen Anzahl von Bildelementen im Empfänger zu verwenden, da die dadurch erhaltene vergrößerte Datenmenge dennoch in kürzester Zeit verarbeitet werden kann.

Die Vorrichtung kann dabei mit beliebigen optischen Abtasteinrichtungen verwendet werden. Insbesondere kann vorgesehen werden, daß die Kamera unmittelbar den von der CD reflektierten Lichtstrahl ohne Spiegelung und Strahlteilung aufnimmt. Ferner können auch Abtasteinrichtungen vorgesehen sein, bei denen der einfallende Lichtstrahl im rechten Winkel auf die CD trifft.

### Bezugszeichenliste:

- 10: Compact-Disc (CD)
- 11: Kernloch
- 12: innerer Randbereich
- 13: Ident-Code-Bereich
- 14: Datenbereich
- 15: Lead-Out
- 16: äußerer Randbereich
- 18: lichtdurchlässige Schicht
- 19: Unterseite
- 20: Metallschicht
- 21: Lackschicht
- 22: Farbschicht
- 23: Pinhole
- 24: Oberfläche
- 25: Alukratzer
- 26: Ölfleck
- 27: Pickel
- 28: Schwarzer Punkt
- 29: Bläschen
- 30: Lackspritzer
- 31: Kratzer
- 40: Abtastvorrichtung
- 41: Lichtstrahl
- 42: Lichtquelle
- 43: Blenden
- 44: Linsensystem
- 45: Mittelachse
- 46: Strahlteiler
- 47: verspiegelte Oberfläche
- 48: Lichtstrahl
- 49: Spiegelelement
- 50: reflektierter Lichtstrahl
- 51: Spiegelpunkt
- 52: Lichtstrahl
- 53: Zeilenkamera
- 54: Empfänger
- 58: Videoausgang
- 60: Vorrichtung
- 61: Datenverarbeitungsanlage
- 62: Speichereinheit
- 63: Filtereinheit
- 64: Auswerteeinheit
- 65: Anzeigemittel
- 66: Synchronisationseinheit
- 67: Signalleitung
- 68: Eingabeeinheit
- 69: Signalleitung
- 70: Signalleitung

## Patentansprüche

1. Verfahren zur Qualitätskontrolle eines Gegenstandes, insbesondere einer Compact-Disc (CD), bei welchem Verfahren wenigstens ein Teilbereich des Gegenstandes (10) von wenigstens einem optischen Abtastsystem (40) abgetastet wird und die Grauwerte der abgetasteten Punkte aufgenommen werden, wobei die Grauwerte zumindest eines Teils der Punkte durch eine Auswerteeinheit (64) ausgewertet werden, dadurch gekennzeichnet, daß zumindest ein Teil der aufgenommenen Grauwerte in einer Speichereinheit (62) gespeichert werden, daß in einer vor der Auswerteeinheit (64) geschalteten Filtereinheit (63) jeweils wenigstens ein Punkt anhand seines Grauwertes als fehlerverdächtig oder fehlerfrei klassifiziert wird, und daß zumindest die als fehlerverdächtig klassifizierten Punkte durch die Auswerteeinheit (64) anhand der in der Speichereinheit (62) gespeicherten Meßdaten ausgewertet werden.

2. Verfahren nach Anspruch 1, dadurch gekennzeichnet, daß in der Filtereinheit (63) jeweils der Grauwert wenigstens eines Punktes mit wenigstens einem vorgebbaren Sollwert und/oder Sollwertbereich verglichen wird.

3. Verfahren nach Anspruch 1 oder 2, dadurch gekennzeichnet, daß in der Filtereinheit (63) jeweils die Grauwerte von wenigstens zwei Punkten miteinander verknüpft werden und das Verknüpfungsergebnis mit einer vorgebbaren Menge von Sollverknüpfungsergebnissen verglichen wird und im Falle einer Abweichung zumindest einer dieser Punkte als fehlerverdächtig klassifiziert wird.

4. Verfahren nach einem der Ansprüche 1 bis 3, dadurch gekennzeichnet, daß in der Filtereinheit (63) jeweils die Grauwerte von zwei nebeneinanderliegenden Punkten miteinander verknüpft werden.

5. Verfahren nach einem der Ansprüche 1 bis 3, dadurch gekennzeichnet, daß in der Filtereinheit (63) jeweils die Grauwerte des aktuellen Punktes und des Vorgängers des vorhergehenden Punktes miteinander verglichen werden.

6. Verfahren nach einem der Ansprüche 1 bis 5, dadurch gekennzeichnet, daß die Auswertung mit unterschiedlichen Prüfschärfen in unterschiedlichen Bereichen (13, 14, 15, 16) des Gegenstandes (10) erfolgt.

7. Verfahren nach einem der Ansprüche 1 bis 6, dadurch gekennzeichnet, daß die unterschiedlichen Bereiche (13, 14, 15, 16) des Gegenstandes (10) von der Auswerteeinheit anhand der verschiedenen Grauwerte in diesen Bereichen identifiziert werden.

8. Verfahren nach einem der Ansprüche 1 bis 7, dadurch gekennzeichnet, daß die optische Abtastung durch einen linienförmigen Lichtstrahl (41) erfolgt und die Grauwerte von wenigstens einer Zeilenkamera (53) aufgenommen werden.

9. Verfahren nach einem der Ansprüche 1 bis 8, dadurch gekennzeichnet, daß sich bei einem rotationssymmetrischen Gegenstand (10) der linienförmige Lichtstrahl (41) radial von der Mittelachse (45) aus erstreckt und die gesamte Oberfläche des Gegenstandes durch wenigstens 10.000 Linien während einer Umdrehung abgetastet wird.

10. Verfahren nach einem der Ansprüche 1 bis 9, dadurch gekennzeichnet, daß die optische Abtastung während einer vollständigen Umdrehung des Gegenstandes (10) in 0,25 bis 2,5 Sekunden erfolgt.

11. Vorrichtung (60) zum Prüfen eines Gegenstandes (10), insbesondere einer CD, die wenigstens ein Abtastmittel zum optischen Abtasten und wenigstens ein Aufnahmemittel (53) zum Erfassen der Grauwerte der abgetasteten Punkte von wenigstens einem Teilbereich des Gegenstandes (10) aufweist, wobei das Aufnahmemittel (53) in Verbindung mit einer Auswerteeinheit (64) für die Grauwerte der Punkte steht, dadurch gekennzeichnet, daß wenigstens ein Speichermittel (63) zum Speichern von zumindest einem Teil der aufgenommenen Grauwerte vorgesehen ist und zwischen dem Aufnahmemittel (53) und der Auswerteeinheit (64) wenigstens ein Filtermittel (63) vorgesehen ist, um die Punkte anhand ihrer Grauwerte vor der Auswerteeinheit (64) zu klassifizieren.

12. Vorrichtung nach Anspruch 11, dadurch gekennzeichnet, daß das Filtermittel (63) eine feste elektronische Schaltung aufweist.

13. Vorrichtung nach Anspruch 11 oder 12, dadurch gekennzeichnet, daß die elektronische Schaltung so geschaltet ist, um jeweils die Grauwerte von wenigstens zwei Punkten miteinander zu verknüpfen.

14. Vorrichtung nach einem der Ansprüche 11 bis 13, dadurch gekennzeichnet, daß die elektronische Schaltung so geschaltet ist, um jeweils den Grauwert von wenigstens einem Punkt mit wenigstens einem vorgebbaren Sollwert und/oder Sollwertbereich zu vergleichen.

15. Vorrichtung nach einem der Ansprüche 11 bis 14, dadurch gekennzeichnet, daß das Abtastmittel wenigstens eine Lichtquelle (42) zum Erzeugen eines linienförmigen Lichtstrahls (41) aufweist.

16. Vorrichtung nach einem der Ansprüche 11 bis 15, dadurch gekennzeichnet, daß das Aufnahmemittel (53) einen zeilenförmigen lichtempfindlichen Empfänger (54) aufweist.
